# EUROPÄISCHE PATENTANMELDUNG

(11) **EP 3 340 527 A1**
(43) Veröffentlichungstag der Anmeldung: **27.06.2018**
(21) Anmeldenummer: 16205227.8
(22) Anmeldetag: 20.12.2016
(51) Int. Cl.: H04L 9/00

(54) **VERFAHREN UND VORRICHTUNG ZUM RECHNERGESTÜTZTEN ERSTELLEN EINES TRANSAKTIONSDATENSATZES**

(71) Anmelder: Siemens Aktiengesellschaft, 80333 München (DE)
(72) Erfinder: Aschauer, Hans, 81829 München (DE); Falk, Rainer, 85586 Poing (DE); Heintel, Markus, 81377 München (DE)

(57) **Zusammenfassung**

Die Erfindung bezieht sich auf ein Verfahren und Vorrichtungen zum rechnergestützten Erstellen eines zweiten Transaktionsdatensatzes. Das Verfahren umfasst einen Verfahrensschritt zum Bereitstellen eines ersten Klartext-Programmcodes. Das Verfahren umfasst einen Verfahrensschritt zum Obfuszieren des ersten Klartext-Programmcodes und/oder Verschlüsseln des ersten Klartext-Programmcodes, wobei der obfuszierte und/oder verschlüsselte erste Klartext-Programmcode als zweiter Programmcode bereitgestellt wird. Das Verfahren umfasst einen Verfahrensschritt zum Erstellen des zweiten Transaktionsdatensatzes, wobei der zweite Transaktionsdatensatz den zweiten Programmcode umfasst und der obfuszierte und/oder verschlüsselte zweite Programmcode ausführbar ist. Das Verfahren umfasst einen Verfahrensschritt zum Erzeugen eines ersten Gliedes einer Blockkette, wobei das erste Glied den zweiten Transaktionsdatensatz umfasst und eine Integrität des ersten Gliedes und/oder vorhergehender Glieder des ersten Gliedes der Blockkette mittels einer ersten Prüfsumme geschützt wird.

## Beschreibung

Die Erfindung bezieht sich auf ein Verfahren und eine Vorrichtung einen Transaktionsdatensatz insbesondere für eine Blockkette zu erstellen.

Die Technologie von Blockketten (engl. Blockchains) bzw. "Distributed Ledgers" ist aktuell ein intensiv diskutierte Technologie. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst i.A. Programmcode, der auch als sogenannter "Smart Contract" bezeichnet werden kann.

Bei Bitcoin wird eine relativ einfache stackbasierte Laufzeitumgebung verwendet. Eine Transaktion umfasst dabei die Prüfsumme zur Überprüfung der Gültigkeit der Transaktion. Die Blockchain-Plattform Ethereum unterstützt eine frei programmierbare Laufzeitumgebung, sodass der Programmcode einer Blockchain flexibel realisiert werden kann. Dabei wird z. B. eine Geschäftslogik als Programmcode in der Transaktion und damit in der Blockchain hinterlegt.

Eine Aufgabe der vorliegenden Erfindung ist es, Verfahren und Vorrichtungen bereitzustellen, welche eine Alternative zu den bekannten Verfahren bieten.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Gemäß einem ersten Aspekt betrifft die Erfindung ein Verfahren zum rechnergestützten Erstellen eines zweiten Transaktionsdatensatzes mit folgenden Verfahrensschritten:
- Bereitstellen eines ersten Klartext-Programmcodes;
- Obfuszieren des ersten Klartext-Programmcodes und/oder Verschlüsseln des ersten Klartext-Programmcodes, wobei der obfuszierte und/oder verschlüsselte erste Klartext-Programmcode als zweiter Programmcode bereitgestellt wird;
- Erstellen des zweiten Transaktionsdatensatzes, wobei
   - der zweite Transaktionsdatensatz den zweiten Programmcode umfasst,
   - der obfuszierte und/oder verschlüsselte zweite Programmcode ausführbar ist;
- Erzeugen eines ersten Gliedes einer Blockkette, wobei
   - das erste Glied den zweiten Transaktionsdatensatz umfasst,
- eine Integrität des ersten Gliedes und/oder vorhergehender Glieder des ersten Gliedes der Blockkette mittels einer ersten Prüfsumme geschützt wird.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter "obfuszieren" oder "Obfuskation" kann im Zusammenhang mit der Erfindung beispielsweise eine absichtliche Veränderung von Programmcode verstanden werden, sodass der Programmcode insbesondere für Menschen schwer verständlich oder schwer rückgewinnbar wird. Vorzugsweise wird der Aufwand für Reverse Engineering stark erhöht, um insbesondere Veränderung oder Diebstahl von Programmteilen zu erschweren. Insbesondere wird beim Obfuszieren der ausführbare Programmcode derart verändert, dass er vorzugsweise schwer verständlich oder schwer rückgewinnbar ist, insbesondere jedoch so, dass die Funktion des Programmcodes erhalten bleibt. Ein obfuszierter Programmcode kann zu dessen Ausführung insbesondere eine längere Ausführungszeit und/oder mehr Ressourcen als ein unobfuszierter Programmcode benötigen. Unter "obfuszieren" oder "Obfuskation" kann im Zusammenhang mit der Erfindung beispielsweise auch Whitebox Kryptographie verstanden werden.

Unter einer "Prüfsumme" kann im Zusammenhang mit der Erfindung beispielsweise eine kryptographische Prüfsumme oder kryptographischer Hash bzw. Hashwert verstanden werden, die insbesondere mittels einer kryptographische Hashfunktion über einen Datensatz gebildet oder berechnet wurde. Weiterhin kann darunter insbesondere auch eine digitale Signatur oder ein kryptographischer Nachrichtenauthentisierungscode verstanden werden.

Unter "erster Prüfsumme" kann im Zusammenhang mit der Erfindung eine Prüfsumme verstanden werden, die insbesondere über das vorhergehende Glied/Vorgänger-Glied des ersten Gliedes der Blockkette gebildet wurde. Zusätzlich oder alternativ kann die erste Prüfsumme insbesondere auch über Transaktionsdatensätze des vorhergehenden Gliedes/Vorgänger-Gliedes (z. B. einen zweiten Transaktionsdatensatz des Vorgänger-Gliedes) gebildet worden sein. Dies kann beispielsweise auch mittels einer dritten Prüfsumme realisiert werden, über die insbesondere auch die erste Prüfsumme gebildet wird. Zusätzlich oder Alternativ kann die erste Prüfsumme insbesondere auch über Transaktionsdatensätze (z. B. den zweiten Transaktionsdatensatz des ersten Gliedes) des ersten Gliedes gebildet worden sein. Dies kann beispielsweise auch mittels einer vierten Prüfsumme realisiert werden, über die insbesondere auch die erste Prüfsumme gebildet wird.

Unter "Bereitstellen" kann im Zusammenhang mit der Erfindung beispielsweise ein Laden oder ein Speichern, beispielsweise des obfuszierten und/oder verschlüsselten Programmcodes, auf oder von einem Datenträger verstanden werden.

Unter "Proof-of-Work-Nachweis" kann im Zusammenhang mit der Erfindung beispielsweise ein Lösen einer rechenintensiven Aufgabe verstanden werden, die insbesondere abhängig vom Glied-Inhalt/Inhalt eines zweiten Transaktionsdatensatzes zu lösen ist. Eine solche rechenintensive Aufgabe wird beispielsweise auch als kryptographisches Puzzle bezeichnet.

Unter einer "blinded Turing Machine" kann im Zusammenhang mit der Erfindung beispielsweise eine sichere Ausführung einer Funktion auf einen vorgegebene Daten(satz) verstanden werden, wobei insbesondere die Eingabedaten, Ausgabedaten und Zwischenergebnisse dieser Ausführung von einer Ausführungsumgebung verborgen sind. Dies kann beispielsweise durch eine Verwendung einer vollständig homomorphen Verschlüsselung, insbesondere mittels einer partiell homomorphen Verschlüsselung, mittels Yao's Garbled Circuits oder einer sicheren Mehrparteienberechnung (engl. secure multiparty computation) [1] realisiert werden.

Unter einem "homomorphen Verschlüsselungsverfahren" bzw. "homomorpher Verschlüsselung" kann im Zusammenhang mit der Erfindung beispielsweise ein kryptographisches Verfahren verstanden werden, welches insbesondere über Homomorphieeigenschaften verfügt, wodurch sich beispielsweise Berechnungen auf dem Geheimtext durchführen lassen, die vorzugsweise mathematischen Operationen des entsprechenden Klartextes entsprechen.

Unter "Glied" kann im Zusammenhang mit der Erfindung ein Block einer Blockkette verstanden werden, die insbesondere als Datenstruktur realisiert ist.

Unter "vorhergehender Glieder des ersten Gliedes der Blockkette" kann im Zusammenhang mit der Erfindung beispielsweise nur das Glied der Blockkette verstanden werden, das insbesondere dem ersten Glied direkt vorhergeht. Alternativ können unter "vorhergehender Glieder des ersten Gliedes der Blockkette" insbesondere auch alle Glieder der Blockkette verstanden werden, die dem ersten Glied vorhergehen. Hierdurch kann beispielsweise die erste Prüfsumme insbesondere nur über das dem ersten Glied direkt vorhergehende Glied oder über alle dem ersten Glied vorhergehenden Glieder gebildet werden.

Unter einem "Transaktionsdatensatz" können im Zusammenhang mit der Erfindung beispielsweise die Daten einer Transaktion einer Bockkette (engl. Blockchain) verstanden werden. Ein Transaktionsdatensatz kann beispielsweise einen Programmcode (z. B. den zweiten Programmcode) umfassen, der beispielsweise ein Smart Contract sein kann.

Unter einem "Ressourcen-Wert" kann im Zusammenhang mit der Erfindung beispielsweise eine Menge an Rechner-Ressourcen verstanden werden, die beispielsweise zum Ausführen eines Programmcodes notwendig sind. Dies können beispielsweise eine Anzahl von Maschinenzyklen, Speicherverbrauch oder eine Laufzeit zur Ausführung des Programmcodes sein.

Das Verfahren ist beispielsweise dahingehend vorteilhaft, um insbesondere eine Geschäftslogik des zweiten Transaktionsdatensatzes zu verbergen. Somit ist insbesondere der zweite Programmcode des zweiten Transaktionsdatensatzes kryptographisch geschützt. Insbesondere kann mit dem erfindungsgemäßen Verfahren die Geschäftslogik, die als Smart Contract in Form von (zweiten) Programmcode einer Transaktion/eines (zweiten) Transaktionsdatensatzes einer Blockchain vorliegt, vorzugsweise gegenüber Außenstehenden oder Dritten verborgen werden. Dennoch können Außenstehende oder Dritte insbesondere eine korrekte Durchführung nachprüfen. Dadurch wird beispielsweise zum Einen ein Ausspähen von Geschäftsgeheimnissen, wie komplexe Algorithmen, Messverfahren oder Messwerte, erschwert. Zudem wird insbesondere erschwert, dass beispielsweise eine Firma mittels einer gezielten Marktmanipulation durch Ausnutzen ihrer Smart Contracts geschädigt wird, da insbesondere die Bedeutung der Smart Contracts für Außenstehende nicht einfach nachvollziehbar ist.

Zusätzlich kann insbesondere mit dem erfindungsgemäßen Verfahren beispielsweise ein Klartext-Glied einer Klartext-Blockkette bzw. deren erster Transaktionsdatensatz, der den ersten Klartext-Programmcode umfasst, in eine Blockkette konvertiert werden, deren Glieder jeweils zweite Transaktionsdatensätze umfassen, die insbesondere nach dem erfindungsgemäßen Verfahren kryptographisch geschützt sind.

Bei einer ersten Ausführungsform des Verfahrens wird der zweite Programmcode durch eine blinded Turing Machine ausgeführt.

Das Verfahren ist beispielsweise dahingehend vorteilhaft, um beispielsweise den zweiten Programmcode verschlüsselt auszuführen. Hierdurch wird insbesondere eine hohe Sicherheit erreicht.

Bei einer weiteren Ausführungsform des Verfahrens wird das Verschlüsseln mittels eines homomorphen Verschlüsselungsverfahrens durchgeführt.

Das Verfahren ist beispielsweise dahingehend vorteilhaft, um beispielsweise den zweiten Programmcode verschlüsselt auszuführen. Hierdurch wird insbesondere eine hohe Sicherheit erreicht. Es ist dabei insbesondere möglich, dass beispielsweise ein Dritter einen verschlüsselten Programmcode (z. B. zweiter Programmcode) nur ausführen kann, wenn er vorzugsweise über einen zur Ausführung des Smart Contracts (z. B. zweiter Programmcode) benötigten kryptographischen Schlüssel verfügt. Dieser Schlüssel kann insbesondere auch als Lizenzcode bezeichnet werden. Ein Dritter kann insbesondere dabei also den Programmcode (z. B. zweiter Programmcode) nur ausführen, soweit ihm insbesondere der dafür erforderliche Lizenzcode vorliegt. Beispielsweise kann der Lizenzcode erst zu einem bestimmten, späteren Zeitpunkt nach Einstellen des Smart Contracts in die Blockchain bereitgestellt werden. In einer anderen Variante wird der Lizenzcode (z. B. zweite Prüfsumme) beispielsweise zum Überprüfen des Smart Contracts nur einer Teilmenge der Blockchainknoten bereitgestellt.

Bei einer weiteren Ausführungsform des Verfahrens wird das Obfuszieren mittels eines Obfuskators durchgeführt.

Das Verfahren ist beispielsweise dahingehend vorteilhaft, um beispielsweise den zweiten Programmcode insbesondere für Unberechtigte oder Dritte schwer lesbar oder unleserlich zu machen.

Bei einer weiteren Ausführungsform des Verfahrens wird der erste Klartext-Programmcode zu einem späteren Zeitpunkt nach dem Erzeugen des ersten Gliedes als dritter Klartext-Programmcode bereitgestellt, wobei insbesondere der dritte Klartext-Programmcode als ein zweites Glied der Blockkette bereitgestellt wird.

Das Verfahren ist beispielsweise dahingehend vorteilhaft, um beispielsweise den ersten Klartext-Programmcode zu einem späteren Zeitpunkt bereitzustellen. Dies kann beispielsweise in Situationen sinnvoll sein, bei denen ein Schutz der Geschäftslogik ab einem bestimmten Zeitpunkt unwichtig geworden ist. Dieser Zeitpunkt kann beispielsweise schon beim Erzeugen des ersten Gliedes oder beim Erstellen des zweiten Transaktionsdatensatzes bekannt sein. In einem solchen Fall kann beispielsweise das erste Glied oder der zweite Transaktionsdatensatz diesen Zeitpunkt umfassen. Damit kann insbesondere ein Nutzer entscheiden, ob er beispielsweise eine ressourcenaufwändigere Ausführung des zweiten Programmcodes sofort ausführen möchte oder ob er insbesondere auf den dritten Klartext-Programmcode wartet, um diesen beispielsweise ressourcensparender auszuführen. Dadurch kann insbesondere bei einer späteren Nachprüfung von weit zurückliegenden Blockchain-Transaktionen der Rechenaufwand für die Ausführung von obfusziertem bzw. verschlüsseltem Programmcode der darin umfassten Smart Contracts vermieden werden. Weiterhin wird insbesondere dadurch ermöglicht, dass beispielsweise eine spätere Nachprüfung von weit zurückliegenden Blockchain-Transaktionen/dem zweiten Transaktionsdatendatz auch durch Vierte erfolgen kann, die nicht über den Schlüssel bzw. Lizenzcode (z. B. erste Prüfsumme und/oder zweite Prüfsumme) verfügen, der zur Ausfühhung des obfuszierten bzw. verschlüsselten Programmcodes erforderlich ist.

Bei einer weiteren Ausführungsform des Verfahrens umfasst der zweite Transaktionsdatensatz mindestens eine zweite Prüfsumme, die über den ersten Klartext-Programmcode gebildet wird.

Das Verfahren ist beispielsweise dahingehend vorteilhaft, um beispielsweise eine hohe Sicherheit des Verfahrens zu erreichen, da insbesondere die Integrität des ersten bzw. dritten Klartext-Programmcodes prüfbar ist.

Bei einer weiteren Ausführungsform des Verfahrens wird eine inhaltliche Übereinstimmung des dritten Klartext-Programmcodes mit dem zweiten Programmcode mittels der zweiten Prüfsumme festgestellt.

Bei einer weiteren Ausführungsform des Verfahrens umfasst der zweite Transaktionsdatensatz einen ersten Ressourcen-Wert und/oder einen zweiten Ressourcen-Wert, wobei insbesondere der zweite Ressourcen-Wert geringer ist als der erste Ressourcen-Wert.

Das Verfahren ist beispielsweise dahingehend vorteilhaft, um beispielsweise einen Nutzer die notwendigen Ressourcen anzugeben, die zum Ausführen des zweiten Programmcodes oder des dritten Klartext-Programmcodes notwendig sind. Die entsprechenden Ressourcen-Werte können beispielsweise einen Höchstwert angeben, die eine Ausführung eines Programmcodes benötigt. Alternativ können die entsprechenden Ressourcen-Werte beispielsweise einen Mindestwert angeben, die eine Ausführung eines Programmcodes benötigt.

Bei einer weiteren Ausführungsform des Verfahrens wird der zweite Programmcode unter Einhaltung des ersten Ressourcen-Wertes ausgeführt.

Das Verfahren ist beispielsweise dahingehend vorteilhaft, um beispielsweise sicherzustellen, dass insbesondere nur ein Programmcode ausgeführt wird, der beispielsweise nicht zu viele Ressourcen verwendet.

Bei einer weiteren Ausführungsform des Verfahrens wird der dritte Klartext-Programmcode unter Einhaltung des zweiten Ressourcen-Wertes ausgeführt.

Das Verfahren ist beispielsweise dahingehend vorteilhaft, um beispielsweise sicherzustellen, dass insbesondere nur ein Programmcode ausgeführt wird, der beispielsweise nicht zu viele Ressourcen verwendet.

Gemäß einem ersten Aspekt betrifft die Erfindung eine Vorrichtung zum rechnergestützten Erstellen eines zweiten Transaktionsdatensatzes aufweisend:
- ein erstes Bereitstellungsmodul zum Bereitstellen eines ersten Klartext-Programmcodes;
- ein erstes Obfuskationsmodul zum Obfuszieren des ersten Klartext-Programmcodes und/oder Verschlüsseln des ersten Klartext-Programmcodes, wobei der obfuszierte und/oder verschlüsselte erste Klartext-Programmcode als zweiter Programmcode bereitgestellt wird;
- ein erstes Erstellungsmodul zum Erstellen des zweiten Transaktionsdatensatzes, wobei
   - der zweite Transaktionsdatensatz den zweiten Programmcode umfasst,
   - der obfuszierter und/oder verschlüsselter zweite Programmcode ausführbar ist;
- ein erstes Erzeugungsmodul zum Erzeugen eines ersten Gliedes der Blockkette, wobei
   - das erste Glied den zweiten Transaktionsdatensatz umfasst,
   - eine Integrität des ersten Gliedes und/oder vorhergehender Glieder des ersten Gliedes der Blockkette mittels einer ersten Prüfsumme geschützt wird.

Bei einer weiteren Ausführungsform der Vorrichtung umfasst die Vorrichtung zumindest ein weiteres Modul oder mehrere weitere Module zur Durchführung des erfindungsgemäßen Verfahrens (oder einer seiner Ausführungsformen) zum Erstellen des tiefen neuronalen Netzes.

Gemäß einem weiteren Aspekt betrifft die Erfindung eine Ermittlungsvorrichtung zum rechnergestützten Ermitteln von Merkmalen eines Objekts mittels eines Systemverhaltens eines dynamischen Systems aufweisend:
- ein erstes Erfassungsmodul zum Erfassen eines Messdatensatzes von dem Objekt;
- ein erstes Zerlegemodul zum Zerlegen des Messdatensatzes mittels einer Auswahlfunktion in Messwert-Abschnitte;
- ein zweites Bereitstellungsmodul zum Bereitstellen eines konfigurierten tiefen neuronalen Netzes, welches eine Eingabeschicht, eine Ausgabeschicht und eine Vielzahl von Verarbeitungsschichten umfasst, wobei einer jeweiligen Verarbeitungsschicht jeweils einer der Messwert-Abschnitte zugeordnet wird;
- ein erstes Übermittlungsmodul zum Übermitteln von Messwerten der Messwert-Abschnitte an die dem jeweiligen Messwert-Abschnitt zugeordnete Verarbeitungsschicht;
- ein erstes Ermittlungsmodul zum Ermitteln der Merkmale anhand des Messdatensatzes mittels des konfigurierten tiefen neuronalen Netzes, wobei jeweils die Messwerte durch Neuronen der dem entsprechenden Messwert-Abschnitts zugeordneten Verarbeitungsschicht verarbeitet werden;
- ein zweites Übermittlungsmodul zum Übermitteln von Analyseergebnissen von den Verarbeitungsschichten an die Ausgabeschicht.

Bei einer weiteren Ausführungsform der Ermittlungsvorrichtung umfasst die Ermittlungsvorrichtung zumindest ein weiteres Modul oder mehrere weitere Module zur Durchführung des erfindungsgemäßen Verfahrens (oder einer seiner Ausführungsformen) zum rechnergestützten Erstellen eines zweiten Transaktionsdatensatzes.

Gemäß einem weiteren Aspekt betrifft die Erfindung einen zweiten Transaktionsdatensatz für ein Glied für eine Blockkette, aufweisend
- einen zweiten Programmcode, wobei
   - der zweite Programmcode ein obfuszierter und/oder verschlüsselter erster Klartext-Programmcode ist;
   - der zweite Programmcode in obfuszierter und/oder verschlüsselter Form ausführbar ist;

Gemäß einem weiteren Aspekt betrifft die Erfindung ein Glied für eine Blockkette, aufweisend
- einen erfindungsgemäßen zweiten Transaktionsdatensatz;
- eine erste Prüfsumme über das Glied zum Schützen der Integrität des Gliedes und/oder vorhergehender Glieder des Gliedes der Blockkette.

Gemäß einem weiteren Aspekt betrifft die Erfindung eine Blockkette aufweisend mindestens ein erstes erfindungsgemäßes Glied.

Gemäß einem weiteren Aspekt betrifft die Erfindung eine Verwendung des erfindungsgemäßen Gliedes als kryptographisch geschützte Transaktion.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die genannte erfindungsgemäße Vorrichtung und/oder der Transaktionsdatensatz und/oder das Glied und/oder die Blockkette erstellt werden.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass diese erfindungsgemäße Vorrichtung und/oder das Glied und/oder die Blockkette erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung als ein Ablaufdiagramm des erfindungsgemäßen Verfahrens;
- Fig. 2: ein zweites Ausführungsbeispiel der Erfindung als Vorrichtung;
- Fig. 3: ein drittes Ausführungsbeispiel der Erfindung als System;
- Fig. 4: ein viertes Ausführungsbeispiel eines zweiten Transaktionsdatensatzes eines Gliedes einer Blockkette;
- Fig. 5: ein fünftes Ausführungsbeispiel der Erfindung als Blockkette.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

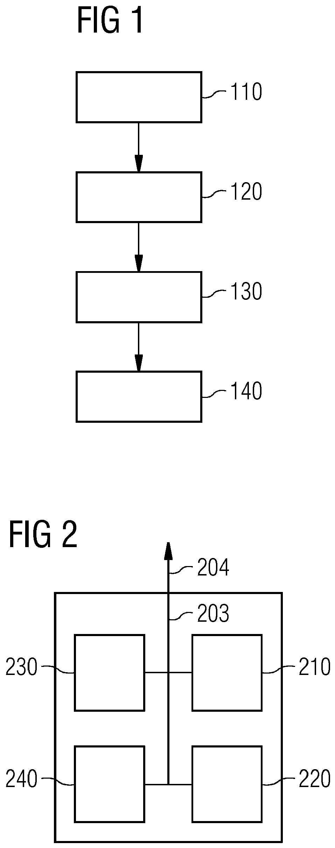

Die Fig. 1 zeigt ein erstes Ausführungsbeispiel der Erfindung als ein Ablaufdiagramm des erfindungsgemäßen Verfahrens zum rechnergestützten Erstellen eines zweiten Transaktionsdatensatzes für eine Blockkette.

Das Verfahren ist vorzugsweise rechnergestützt und wird insbesondere durch den Sender implementiert/realisiert.

Im Einzelnen wird in diesem Ausführungsbeispiel ein Verfahren zum rechnergestützten Erstellen eines zweiten Transaktionsdatensatzes realisiert.

Das Verfahren umfasst einen ersten Verfahrensschritt 110 zum Bereitstellen eines ersten Klartext-Programmcodes. Der erste Klartext-Programmcode kann beispielsweise aus einem ersten Transaktionsdatensatz, der vorzugsweise im Klartext vorliegt, in ein erstes Speichermodul geladen werden.

Das Verfahren umfasst einen zweiten Verfahrensschritt 120 zum Obfuszieren des ersten Klartext-Programmcodes und/oder Verschlüsseln des ersten Klartext-Programmcodes, wobei der obfuszierte und/oder verschlüsselte erste Klartext-Programmcode als zweiter Programmcode bereitgestellt wird. Zum Obfuszieren liest aus dem ersten Speichermodul hierzu beispielsweise ein Obfuskator den ersten Klartext-Programmcode aus. Alternativ liest zum Verschlüsseln aus dem ersten Speichermodul beispielsweise ein Verschlüsselungsalgorithmus den ersten Klartext-Programmcode aus. Es ist aber beispielsweise auch denkbar, dass zunächst der erste Programmcode obfusziert wird und anschließend an den Verschlüsselungsalgorithmus zum zusätzlichen Verschlüsseln übermittelt wird. Das Bereitstellen des zweiten Programmcodes kann beispielsweise dann wiederum über das erste Speichermodul oder ein weiteres Speichermodul erfolgen.

Das Verfahren umfasst einen dritten Verfahrensschritt 130 zum Erstellen des zweiten Transaktionsdatensatzes, wobei der zweite Transaktionsdatensatz den zweiten Programmcode umfasst. Der obfuszierte und/oder verschlüsselte zweite Programmcode kann beispielsweise ausführbar sein. Alternativ oder zusätzlich ist der zweite Programmcode in entschlüsselter Form und/oder in verschlüsselter Form (muss insbesondere nicht für eine Ausführung nochmals entschlüsselt werden) ausführbar. Hierzu kann der zweite Programmcode beispielsweise aus dem ersten Speichermodul geladen werden und insbesondere in den zweiten Transaktionsdatensatz eingefügt werden.

Das Verfahren umfasst einen vierten Verfahrensschritt 140 zum Erzeugen eines ersten Gliedes einer Blockkette, wobei das erste Glied den zweiten Transaktionsdatensatz (inklusive des zweiten Programmcodes) umfasst und eine Integrität des ersten Gliedes (inklusive des zweiten Transaktionsdatensatzes mit dem zweiten Programmcode) und/oder vorhergehender Glieder des ersten Gliedes der Blockkette mittels einer ersten Prüfsumme geschützt wird. Die erste Prüfsumme kann beispielsweise an das erste Glied angehängt werden und/oder als Prüfsumme des vorhergehenden Blocks in einem dem ersten Glied nachfolgenden Glied eingefügt werden.

Der zweite Programmcode kann beispielsweise (im Falle einer Obfuskation) dann einfach von einem Nutzer zu einem späteren Zeitpunkt ausgeführt werden. Ist der zweite Programmcode verschlüsselt, so kann der verschlüsselte zweite Programmcode im Falle einer homomorphen Verschlüsselung ebenfalls ausgeführt werden. Alternativ kann der verschlüsselte zweite Programmcode auch von einer Blinded Turing Machine ausgeführt werden. Weiterhin ist es möglich, dass zur Ausführung des obfuszierten und/oder verschlüsselten Programmcodes ein Lizenzkey bzw. ein Lizenzschlüssel verwendet wird.

Mit anderen Worten wird ein erfindungsgemäßes Verfahren zum Erstellen von Gliedern einer Blockkette (engl. Blockchain) bzw. zum Erstellen einer Blockkette vorgeschlagen, das insbesondere die Überprüfung einer oder mehrerer Transaktionen (einer oder mehreren zweiten Transaktionsdatensätzen) durch den zweiten Programmcode (Smart Contract) unterstützt.

Erfindungsgemäß liegt der zweite Programmcode (Smart Contract) in obfuszierter und/oder (ausführbar) verschlüsselter Form vor. Das bedeutet insbesondere, dass der Programmcode ausführbar ist und dadurch die Transaktion/zweiten Transaktionsdatensatz durch Dritte überprüfbar ist, obwohl der Programmcode nicht in verständlicher oder praktikabel reverse-engineerbarer Form vorliegt.

Insbesondere kann der zweite Programmcode des zweiten Transaktionsdatensatzes in einer der folgenden Formen oder einer Kombination davon vorliegen:
- partiell homomorph verschlüsselt und durch eine Blind Turing Machine ausführbar- vollständig homomorph verschlüsselt und ausführbar
   z. B. mit einer Fully Homomorphic Encryption Machine (vm-crypt)
- obfusziert und ausführbar, auch als Whitebox Cryptography bezeichnet
- verschlüsselt und ausführbar, soweit ein Lizenzkey bzw. ein Lizenzschlüssel vorliegt.

Mit dem erfindungsgemäßen Verfahren kann eine bereitgestellte Klartext-Block-Transaktionsinformation (z. B. der erste Klartext-Programmcode/Smart Contract oder ein erster Transaktionsdatensatz, der den ersten Klartext-Programmcode/Smart Contract umfasst) in eine kryptographisch geschützte obfuszierte und/oder verschlüsselte Form transformiert (obfuszierter und/oder verschlüsselter zweiter Prgrammcode/Smart Contract, zweiter Transaktionsdatensatz) werden, die insbesondere eine geschützte, verifizierbare Transaktion/zweiten Transaktionsdatensatz bildet. Diese geschützte, verifizierbare Transaktion kann insbesondere einer Blockketten-Plattform (engl. Blockchain-Plattform) zur Aufnahme in eine Blockkette bereitgestellt werden.

In einer Variante des Verfahrens kann zu einem vorgegebenen Termin (Datumangabe) oder Ereignis (z. B. Inkrafttreten des Vertrags), die Obfuskation und/oder Verschlüsselung aufgehoben werden. Dazu kann z. B. die nicht obfuszierte und/oder unverschlüsselte Variante des Smart Contract (z. B. erster/dritter Klartext-Programmcode) veröffentlicht werden, und es kann die Übereinstimmung der Funktionalität überprüft werden (z. B. anhand von Testdaten, formaler Verifikation, oder Überprüfung der Äquivalenz des obfuszierten und des nicht obfuszierten Codes).

In einer weiteren Variante werden (bis dahin geheim gehaltene) kryptographische Schlüssel bzw. Lizenzcodes veröffentlicht, die eine Entschlüsselung und die Überprüfbarkeit der Übereinstimmung zwischen obfuszierten und/oder verschlüsselten Programmcode (z. B. zweiter Programmcode) und nicht obfusziertem und/oder unverschlüsseltem Programmcode (z. B. erster/dritter Klartext-Programmcode) ermöglichen. Dies kann zusätzlich durch einen kryptographischen Hash (zweite Prüfsumme) des nicht-obfuszierten Vertrags (z. B. erster Klartext-Programmcode) als Datum (Datenelement) einer Transaktion, z. B. einer Transaktion (z. B. zweiter Transaktionsdatensatz) des ersten Gliedes in der Blockkette, abgesichert werden.

Insbesondere ist es möglich, zu einem früheren Zeitpunkt ausschließlich den kryptographischen Hash (erste Prüfsumme) des Klartext-Vertrages (erster/dritter Klartext-Programmcode) in die Blockchain einzutragen ("Vertragsabsicht"). Der Klartext des Vertrags (erster/dritter Klartext-Programmcode) kann mittels der zweiten Prüfsumme zu einem späteren Zeitpunkt von einer beliebigen Vertragspartei, der der Klartext-Programmcode vorliegt als Transaktion, z. B. als dritter Transaktionsdatensatz oder weiterer zweiter Transaktionsdatensatz eines zweiten Gliedes, in die Blockkette eingefügt werden. Dabei kann durch Überprüfung des kryptographischen Hashs (erste Prüfsumme) sichergestellt werden, dass es sich dabei tatsächlich um den korrekten Klartext des Vertrags (erster/dritter Klartext-Programmcode) handelt. Der klartext-Programmcode kann dabei auch auf eine andere Art bereitgestellt werden, z. B. auf einem Server.

Weiterhin ist es möglich, zu einem früheren Zeitpunkt den zweiten Programmcode, d. h. den obfuszierten und/oder verschlüsselten Programmcode, sowie zusätzlich den kryptographischen Hash (erste Prüfsumme) des Klartext-Vertrages (erster/dritter Klartext-Programmcode)in die Blockchain einzutragen. Der Klartext des Vertrags (erster/dritter Klartext-Programmcode) kann mittels der zweiten Prüfsumme zu einem späteren Zeitpunkt von einer beliebigen Vertragspartei, der der Klartext-Programmcode vorliegt als Transaktion, z. B. als dritter Transaktionsdatensatz oder weiterer zweiter Transaktionsdatensatz eines zweiten Gliedes, in die Blockkette eingefügt werden. Dabei kann durch Überprüfung des kryptographischen Hashs (erste Prüfsumme) sichergestellt werden, dass es sich dabei tatsächlich um den korrekten Klartext des Vertrags (erster/dritter Klartext-Programmcode) handelt. Dadurch kann der Vertrag überprüft werden, indem der obfuszierte und/oder verschlüsselte Programmcode ausgeführt wird. Nachdem zu einem späteren Zeitpunkt der entsprechende Klartext-Programmcode eingefügt ist bzw. bekannt gemacht werden, kann ein Überprüfer der Blockchain wahlweise den obfuszierten und/oder verschlüsselten Programmcode des Smart Contracts ausführen, oder den manipulationsgeschützt zugeordneten Klartext-Programmcode. Somit kann ab dem späteren Zeitpunkt der effizienter ausführbare Klartext-Programmcode ausgeführt werden.

Die Bereitstellung Lizenzcodes bzw. Lizenzschlüssels für die Überprüfung eines Smart Contracts kann selbst wiederum durch einen zweiten Smart Contract automatisch erfolgen. Das bedeutet, dass der zweite Smart Contract den Lizenzcode bzw. Lizenzschlüssel bei vorliegen eines vorgebbaren Kriteriums freigibt bzw. bereitstellt.

Die Fig. 2 zeigt ein zweites Ausführungsbeispiel der Erfindung als eine Vorrichtung zum rechnergestützten Erstellen eines zweiten Transaktionsdatensatzes insbesondere für eine Blockkette.

Die Vorrichtung umfasst ein erstes Bereitstellungsmodul 210, ein erstes Obfuskationsmodul 220, ein erstes Erstellungsmodul 230, ein erstes Erzeugungsmodul 240 und eine optionale erste Kommunikationsschnittstelle 204, die über einen ersten Bus 203 kommunikativ miteinander verbunden sind.

Die Vorrichtung kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisiert. Alternativ realisiert der Prozessor insbesondere alle Module des Ausführungsbeispiels. Die weitere/n Komponente/n können beispielsweise ebenfalls über den ersten Bus 303 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das erste Bereitstellungsmodul 210 ist zum Bereitstellen eines ersten Klartext-Programmcodes eingerichtet.

Das erste Bereitstellungsmodul 210 kann beispielsweise mittels des Prozessors, der Speichereinheit und einer ersten Programmkomponente implementiert oder realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass der erste Klartext-Programmcode bereitgestellt wird.

Das erste Obfuskationsmodul 220, beispielsweise ein Obfuskator, ist zum Obfuszieren des ersten Klartext-Programmcodes und/oder Verschlüsseln des ersten Klartext-Programmcodes eingerichtet, wobei der obfuszierte und/oder verschlüsselte erste Klartext-Programmcode als zweiter Programmcode bereitgestellt wird.

Das erste Obfuskationsmodul 220 kann beispielsweise mittels des Prozessors, der Speichereinheit und einer zweiten Programmkomponente implementiert oder realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass der erste Klartext-Programmcode obfusziert und/oder verschlüsselt wird.

Das erste Erstellungsmodul 230 ist zum Erstellen des zweiten Transaktionsdatensatzes eingerichtet, wobei der zweite Transaktionsdatensatz den zweiten Programmcode umfasst. Der (obfuszierte und/oder verschlüsselte) zweite Programmcode kann beispielsweise ausführbar sein. Alternativ oder zusätzlich ist der zweite Programmcode in entschlüsselter Form und/oder in verschlüsselter Form (muss insbesondere nicht für eine Ausführung nochmals entschlüsselt werden) ausführbar.

Das erste Erstellungsmodul 230 kann beispielsweise mittels des Prozessors, der Speichereinheit und einer dritten Programmkomponente implementiert oder realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass der zweite Transaktionsdatensatz erstellt wird.

Das erste Erzeugungsmodul 240 ist zum Erzeugen eines ersten Gliedes der Blockkette eingerichtet, wobei das erste Glied den zweiten Transaktionsdatensatz umfasst und eine Integrität des ersten Gliedes und/oder vorhergehender Glieder des ersten Gliedes der Blockkette mittels einer ersten Prüfsumme geschützt wird.

Das erste Erzeugungsmodul 240 kann beispielsweise mittels des Prozessors, der Speichereinheit und einer vierten Programmkomponente implementiert oder realisiert werden, wobei beispielsweise durch ein Ausführen von Programmbefehlen der vierten Programmkomponente der Prozessor derart konfiguriert wird oder durch die Programmbefehle der Prozessor derart konfiguriert ist, dass das erste Glied erzeugt wird.

Das Ausführen der Programmbefehle der jeweiligen Module kann hierbei beispielsweise mittels des Prozessors selbst und/oder mittels einer Initialisierungskomponente, beispielsweise ein Lader (engl. loader) oder einer Konfigurationskomponente, erfolgen.

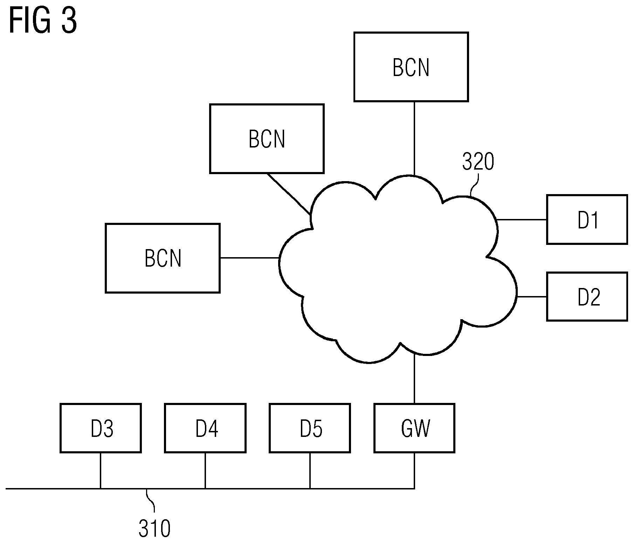

Die Fig. 3 zeigt ein drittes Ausführungsbeispiel der Erfindung als System.

Im Einzelnen zeigt Fig. 3 ein System mit mehreren Geräten, beispielsweise ein erstes Feldgerät D1, ein zweites Feldgerät D2, ein drittes Feldgerät D3, ein viertes Feldgerät D4 und ein fünftes Feldgerät D5, einem Gateway GW und mehrere Blockketten-Knoten BCN, z. B. Bitcoin-Knoten oder Ethereum-Knoten. Das dritte Feldgerät D3, das vierte Feldgerät D4 und das fünfte Feldgerät D5 sind über ein Automatisierungsnetzwerk 310 miteinander vernetzt und über das Gateway mit dem Internet 320 verbunden. Das erste Feldgerät D1 und das zweite Feldgerät D2, sowie die Blockketten-Knoten BCN sind ebenfalls mit dem Internet 320 verbunden und stehen miteinander und über das Gateway GW mit den Feldgeräte D3-D5 kommunikativ in Verbindung.

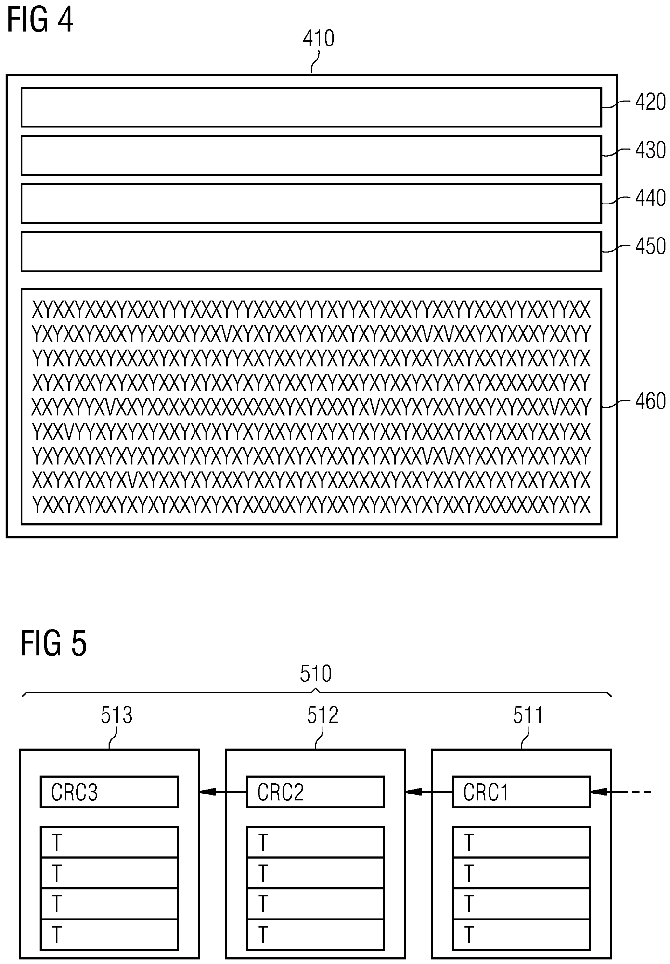

Eine Blockketten-Plattform, wie sie beispielsweise von den Blockkettenknoten BCN verwendet wird, kann beispielsweise eine Blockkette mit Gliedern (wie z. B. Fig. 4 und/oder Fig. 5 gezeigt) verwalten und erstellen, wobei die Blockkette einen oder mehrere erste Glieder umfasst, deren zweite Transaktionsdatensätze nach dem erfindungsgemäßen Verfahren, das beispielsweise in Fig. 1 erläutert wurde, erstellt wurden.

Die Blockketten-Plattform ist beispielsweise in der Lage den zweien Programmcode, der z. B. den homomorph verschlüsselten ersten Klartext-Programmcode (Smart-Contract) umfasst, auszuführen. Alternativ oder Zusötzlich unterstützt die Blockketten-Plattform Smart Contracts, z. B. der zweite Programmcode, zur Bearbeitung von homomorph verschlüsselten Daten.

Die Fig. 4 zeigt ein viertes Ausführungsbeispiel eines zweiten Transaktionsdatensatzes eines Gliedes einer Blockkette.

Das Glied, beispielsweise das in Fig. 1 erläuterte erste Glied, für eine Blockkette umfasst einen zweiten Transaktionsdatensatz, wobei der zweite Transaktionsdatensatz einen zweiten Programmcode umfasst. Der zweite Programmcode ist ein obfuszierter und/oder verschlüsselter erster Klartext-Programmcode und dieser zweite Programmcode ist in obfuszierter und/oder verschlüsselter Form ausführbar, beispielsweise durch Blockketten-Knoten aus Fig. 3, Geräte aus Fig. 3 oder der Plattform aus Fig. 3.

Zusätzlich umfasst das Glied eine erste Prüfsumme über das Glied zum Schützen der Integrität des Gliedes und/oder vorhergehender Glieder des Gliedes der Blockkette.

Im Einzelnen zeigt die Fig. 4 ein Beispiel für einen erfindungsgemäßen zweiten Transaktionsdatensatz 410. Dabei ist der zweite Programmcode 460, z. B. ein Smart Contract, obfusziert (obfuszierter Code ist symbolisch dargestellt). Der zweite Transaktionsdatensatz 410 kann noch weitere Daten umfassen wie beispielsweise einen Betreff 420 (z. B. Siemens System Service Execution 1), einen öffentlichen Schlüssel 430 (z. B. 3A76E21876EFA03787FD629A65E9E990...), den verwendeten Algorithmus 440 des öffentlichen Schlüssels 430 (z. B. ECC) und eine Parameterangabe 450 zu dem Algorithmus (z. B. Curve: brainpoolP160r1). Eine solche Transaktion kann z. B. eine Finanztransaktion wie z. B. einen Bezahlvorgang oder einen Handel mit Aktien oder anderen Wertpapieren, eine Zuordnung eines Objekts wie z. B. eines physikalischen Gemäldes oder eines digitalen Musikstücks, zu einem Eigentümer oder Urheber, eine Energiehandelstransaktion in einem Energieverteilnetz sein.

Durch das erfindungsgemäße Verfahren, das in Fig. 1 erläutert wurde, sind Programmlogik und eingebettete Daten des zweiten Programmcodes 460 nicht mehr praktikabel zugreifbar (reverse engineering), aber dennoch ausführbar. Dadurch ist die Transaktion/der zweite Transaktionsdaten einschließlich ihres Smart Contracts in Form des zweiten Programmcodes in der Blockchain ausführbar und überprüfbar, ohne jedoch die realisierte Programmlogik und die verwendeten Daten in zugreifbarer Form zu offenbaren.

Die Datenelemente des Gliedes oder des (zweiten) Transaktionsdatensatzes können beispielsweise jeweils an unterschiedlichen Speicherbereichen, beispielsweise eines ersten Speichermoduls, abgelegt werden. Diese unterschiedlichen Speicherbereiche sind beispielsweise jeweils ihnen zugeordneten Speicheradressen, z. B. 0x0AB11234 für den zweiten Programmcode, 0x0AB1D456 für den zweiten Transaktionsdatensatz usw., zugreifbar. Insofern kann in einer Variante ebenfalls der zweite Transaktionsdatensatz und/oder das zweite Glied und/oder die Blockkette mittels eines Datenträgers realisiert werden, der insbesondere das erste Speichermodul umfasst.

Die Fig. 5 zeigt ein fünftes Ausführungsbeispiel als Blockkette.

Im Einzelnen zeigt die Fig. 5 die Glieder 510, beispielsweise ein erstes Glied 511, ein zweites Glied 512 und ein drittes Glied 513, einer Blockkette.

Die Glieder 510 umfassen jeweils mehrere Transaktionsdatensätze T. Bei einem, mehreren oder allen Transaktionsdatensätzen kann es sich beispielsweise um einen zweiten Transaktionsdatensatz mit einem zweiten Programmcode (Smart Contract) handeln, so wie dieser in Fig. 4 dargestellt ist. Der zweite Transaktionsdatensatz/die zweiten Transaktionsdatensätze können beispielsweise durch das Verfahren aus Fig. 1 erstellt worden sein.

Die Glieder 510 umfassen jeweils zusätzlich noch eine erste Prüfsumme CRC1, CRC2, CRC3, die abhängig vom Vorgänger-Glied gebildet ist. Somit umfasst das erste Glied 511 eine erste Prüfsumme von seinem Vorgänger-Glied, das zweite Glied 512 eine erste Prüfsumme vom ersten Glied 511, und das dritte Glied 513 eine erste Prüfsumme vom zweiten Glied 512. Die erste Prüfsumme wird vorzugsweise jeweils über die gesamte Datenstruktur inklusive der Transaktionsdatensätze T gebildet.

Alternativ umfassen die Glieder jeweils zu ihren Transaktionsdatensätzen T eine dritte Prüfsumme (i.A. ebenfalls ein Hash-Wert, der abhängig von den Transaktionsdatensätzen gebildet wird). Üblicherweise wird ein Hash-Baum, z. B. ein Merkle Tree oder Patricia Tree, verwendet, dessen Wurzel-Hash-Wert in einem Block hinterlegt wird.

Ein Glied kann weiterhin einen Zeitstempel, eine digitale Signatur, einen Proof-of-Work-Nachweis aufweisen (ein Proof-of-Work-Nachweis ist die Lösung zu einer rechenintensiven Aufgabe, die Abhängig vom Block-Inhalt/Inhalt eines zweiten Transaktionsdatensatzes zu lösen ist; eine solche rechenintensive Aufgabe wird auch als kryptographisches Puzzle bezeichnet).

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Stefan Rass, "Blind Turing-Machines: Arbitrary Private Computations from Group Homomorphic Encryption", (IJACSA) International Journal of Advanced Computer Science and Applications, Vol. 4, No. 11, 2013

## Patentansprüche

1. Verfahren zum rechnergestützten Erstellen eines zweiten Transaktionsdatensatzes mit folgenden Verfahrensschritten:
- Bereitstellen (110) eines ersten Klartext-Programmcodes;
- Obfuszieren (120) des ersten Klartext-Programmcodes und/oder Verschlüsseln des ersten Klartext-Programmcodes, wobei der obfuszierte und/oder verschlüsselte erste Klartext-Programmcode als zweiter Programmcode bereitgestellt wird;
- Erstellen (130) des zweiten Transaktionsdatensatzes, wobei
- der zweite Transaktionsdatensatz den zweiten Programmcode umfasst,
- der obfuszierte und/oder verschlüsselte zweite Programmcode ausführbar ist;
- Erzeugen (140) eines ersten Gliedes einer Blockkette, wobei
- das erste Glied den zweiten Transaktionsdatensatz umfasst,
- eine Integrität des ersten Gliedes und/oder vorhergehender Glieder des ersten Gliedes der Blockkette mittels einer ersten Prüfsumme geschützt wird.

2. Verfahren nach Anspruch 1, wobei der zweite Programmcode durch eine blinded Turing Machine ausgeführt wird.

3. Verfahren nach einem der vorhergehenden Ansprüche, wobei das Verschlüsseln mittels eines homomorphen Verschlüsselungsverfahrens durchgeführt wird.

4. Verfahren nach einem der vorhergehenden Ansprüche, wobei das Obfuszieren mittels eines Obfuskators durchgeführt wird.

5. Verfahren nach einem der vorhergehenden Ansprüche, wobei der erste Klartext-Programmcode zu einem späteren Zeitpunkt nach dem Erzeugen des ersten Gliedes als dritter Klartext-Programmcode bereitgestellt wird, wobei insbesondere der dritte Klartext-Programmcode als ein zweites Glied der Blockkette bereitgestellt wird.

6. Verfahren nach einem der vorhergehenden Ansprüche, wobei der zweite Transaktionsdatensatz mindestens eine zweite Prüfsumme umfasst, die über den ersten Klartext-Programmcode gebildet wird.

7. Verfahren nach einem der vorhergehenden Ansprüche, insbesondere Anspruch 5 oder 6, wobei eine inhaltliche Übereinstimmung des dritten Klartext-Programmcodes mit dem zweiten Programmcode mittels der zweiten Prüfsumme festgestellt wird.

8. Verfahren nach einem der vorhergehenden Ansprüche, wobei der zweite Transaktionsdatensatz einen ersten Ressourcen-Wert und/oder einen zweiten Ressourcen-Wert umfasst, wobei insbesondere der zweite Ressourcen-Wert geringer ist als der erste Ressourcen-Wert.

9. Verfahren nach einem der vorhergehenden Ansprüche, insbesondere Anspruch 8, wobei der zweite Programmcode unter Einhaltung des ersten Ressourcen-Wertes ausgeführt wird.

10. Verfahren nach einem der vorhergehenden Ansprüche, insbesondere Anspruch 8 oder 9, wobei der dritten Klartext-Programmcodes unter Einhaltung des zweiten Ressourcen-Wertes ausgeführt wird.

11. Vorrichtung zum rechnergestützten Erstellen eines zweiten Transaktionsdatensatzes aufweisend:
- ein erstes Bereitstellungsmodul (210) zum Bereitstellen eines ersten Klartext-Programmcodes;
- ein erstes Obfuskationsmodul (220) zum Obfuszieren des ersten Klartext-Programmcodes und/oder Verschlüsseln des ersten Klartext-Programmcodes, wobei der obfuszierte und/oder verschlüsselte erste Klartext-Programmcode als zweiter Programmcode bereitgestellt wird;
- ein erstes Erstellungsmodul (230) zum Erstellen des zweiten Transaktionsdatensatzes, wobei
- der zweite Transaktionsdatensatz den zweiten Programmcode umfasst,
- der obfuszierte und/oder verschlüsselte zweite Programmcode ausführbar ist;
- ein erstes Erzeugungsmodul (240) zum Erzeugen eines ersten Gliedes der Blockkette, wobei
- das erste Glied den zweiten Transaktionsdatensatz umfasst,
- eine Integrität des ersten Gliedes und/oder vorhergehender Glieder des ersten Gliedes der Blockkette mittels einer ersten Prüfsumme geschützt wird.

12. Transaktionsdatensatz (410) für ein Glied einer Blockkette, aufweisend
- einen zweiten Programmcode, wobei
- der zweite Programmcode ein obfuszierter und/oder verschlüsselter erster Klartext-Programmcode ist;
- der zweite Programmcode in obfuszierter und/oder verschlüsselter Form ausführbar ist;

13. Glied (513) für eine Blockkette, aufweisend
- einen zweiten Transaktionsdatensatz (410) nach Anspruch 12;
- eine erste Prüfsumme über das Glied (513) zum Schützen der Integrität des Gliedes und/oder vorhergehender Glieder (512) des Gliedes der Blockkette.

14. Blockkette aufweisend
- mindestens ein erstes Glied (513) nach Anspruch 13.

15. Verwendung des Transaktionsdatensatzes (410) nach Anspruch 12 als kryptographisch geschützte Transaktion eines Gliedes einer Blockkette.

16. Computerprogrammprodukt mit Programmbefehlen zur Durchführung des Verfahrens nach einem der Ansprüche 1 - 10.

17. Computerprogrammprodukt mit Programmbefehlen für ein Erstellungsgerät, das mittels der Programmbefehle konfiguriert wird, die Vorrichtung nach Anspruch 11 und/oder den Transaktionsdatensatz nach Anspruch 12 und/oder das Glied nach Anspruch 13 und/oder die Blockkette nach Anspruch 14 zu erstellen.

18. Bereitstellungsvorrichtung für das Computerprogrammprodukt nach Anspruch 16 oder 17, wobei die Bereitstellungsvorrichtung das Computerprogrammprodukt speichert und/oder bereitstellt.
